(19)

Europäisches
Patentamt
European
Patent Office
Office européen
des brevets

(11) **EP 4 365 854 A1**

(12) **EUROPEAN PATENT APPLICATION**

(43) Date of publication:
**08.05.2024   Bulletin 2024/19**

(21) Application number: **23205589.7**

(22) Date of filing: **24.10.2023**

(51) International Patent Classification (IPC):
***G06V 10/25*** *(2022.01)*       ***G06V 10/75*** *(2022.01)*
***G06V 20/58*** *(2022.01)*

(52) Cooperative Patent Classification (CPC):
**G06V 10/82; G06V 10/25; G06V 10/7515;
G06V 10/764; G06V 20/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **03.11.2022   FI 20225990**

(71) Applicant: **Nokia Solutions and Networks Oy
02610 Espoo (FI)**

(72) Inventor: **MILIORIS, Dimitrios
91300 Massy (FR)**

(74) Representative: **Nokia EPO representatives
Nokia Technologies Oy
Karakaari 7
02610 Espoo (FI)**

(54)    **OBJECT DETECTION AND POSITIONING BASED ON BOUNDING BOX VARIATIONS**

(57)    There is provided a method performed by an apparatus for positioning comprising receiving images of a video sequence for object detection; searching an object from the received images; defining a bounding box around a detected object in the received images; calculating mean and covariance to the detected object; determining, based on the mean and covariance, a position of at least one of the following: the apparatus, the detected object, or an image capturing device; and determining a drift error of the determined position.

Fig. 6

**Description**

## TECHNICAL FIELD

The present invention relates to methods and apparatuses for image based object detection and positioning based on bounding box variations.

## BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Importance of positioning systems has increased, especially for indoor environments. While Global Positioning Systems (GPS) are widely used for outdoors, they may fail to provide accurate positioning indoors, due to various phenomena, such as shadowing and multi-path fading, especially for small-scale spaces.

Received signal strength (RSS), Bluetooth™, RFID (radio frequency identification) reader antennas, and systems based on images and known landmarks that can be matched with known training databases of the physical space have been used for indoor positioning.

With the development of hardware, using images is becoming a more straightforward way to perform accurate indoor positioning and wayfinding. Classic techniques nowadays use landmarks in the physical space that can be recognized by cameras moving around the environment. The main idea is to match the identified photo taken by the camera with the dataset of tagged images of the physical space. There is one main drawback of this method. If the landmark is missing from the environment, the space cannot be identified. Most modern techniques try to imitate the human capability of recognizing indoor spaces based on visual cues and spatial features and matching these with visual experiences they had in the past, with the power of neural networks and deep learning techniques. These models are based on object detection, feature extraction and mapping as well as the visual history. There has been some progress lately with models which capture the dynamics of moving around the physical space with Bayesian filtering and based on perceptual and policy models. The perceptual model gets as an input the user's observation and gives as an output the tensor likelihood and is trained with a simple light weight deep neural network model, while the policy model gets as an input the Belief and gives as an output the probability which defines the next action of going to a specific direction and is based on reinforcement learning. However, this system cannot provide precise location estimation but rather than localize a user in a larger area with higher granularity.

## SUMMARY

Some embodiments provide a method and apparatus for image-based object detection and positioning based on bounding box variations.

According to some embodiments, an apparatus captures an image; objects are searched from the captured image; a bounding box is defined around the objects the object recognition procedure has detected; and for each detected object an object recognition is performed to determine which kind of object it is. This procedure may be repeated a number of times so that a mean and covariance can be calculated. The mean and covariance can be used to determine the distance from the apparatus to each of the detected and recognized objects. Based on the assumption that the actual position of at least some of the objects in the scene is known, the determined distances can be used to calculate the position of the apparatus.

According to a first aspect, there is provided an apparatus comprising:

means for receiving images of a video sequence for object detection;
means for searching objects from the received images;
means for defining bounding boxes around detected objects in the captured images;
means for calculating mean and covariance to the detected objects;
means for determining, based on the mean and covariance, a position of at least one of the following: the apparatus, the detected object, or an image capturing device; and
means for determine a drift error of the determined position.

According to a second aspect there is provided a method comprising:

receiving images of a video sequence for object detection;

searching objects from the received images;
defining bounding boxes around detected objects in the captured images;
calculating mean and covariance to the detected objects;
determining, based on the mean and covariance, a position of at least one of the following: the apparatus, the detected object, or an image capturing device; and
determining a drift error of the determined position.

According to a third aspect there is provided an apparatus comprising at least one processor; and at least one memory storing instructions that, when executed by the at least one processor, cause the apparatus at least to:

receive images of a video sequence for object detection;
search objects from the received images;
define bounding boxes around detected objects in the captured images;
calculate mean and covariance to the detected objects;
determine, based on the mean and covariance, a position of at least one of the following: the apparatus, the detected object, or an image capturing device; and
determine a drift error of the determined position.

According to some aspects, there is provided the subject matter of the independent claims. Some further aspects are defined in the dependent claims. The embodiments that do not fall under the scope of the claims are to be interpreted as examples useful for understanding the disclosure.

## BRIEF DESCRIPTION OF THE DRAWINGS

For a more complete understanding of example embodiments of the present invention, reference is now made to the following descriptions taken in connection with the accompanying drawings in which:

Fig. 1 shows a block diagram of an example of an electronic device, in accordance with an embodiment;
Fig. 2 shows an example of a scene and an image of the scene captured by the apparatus of Fig. 1;
Fig. 3 illustrates in a simplified way a structure of a convolutional neural network;
Fig. 4 illustrates a situation in which the apparatus used captured image to determine distances to objects in the scene;
Fig. 5 illustrates a series of images captured by the apparatus of Fig. 1 for positioning purposes;
Fig. 6 shows a method according to an embodiment as a simplified flow diagram; and
Fig. 7 shows a part of an exemplifying wireless communications access network in accordance with an approach.

## DETAILED DESCRIPTON OF SOME EXAMPLE EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

In the following, some example embodiments will be provided how images captured by a capturing device such as a camera can be utilized in positioning and collision avoidance, for example. An example application area is an intelligent transportation system (ITS) and especially for the so-called automated last mile delivery.

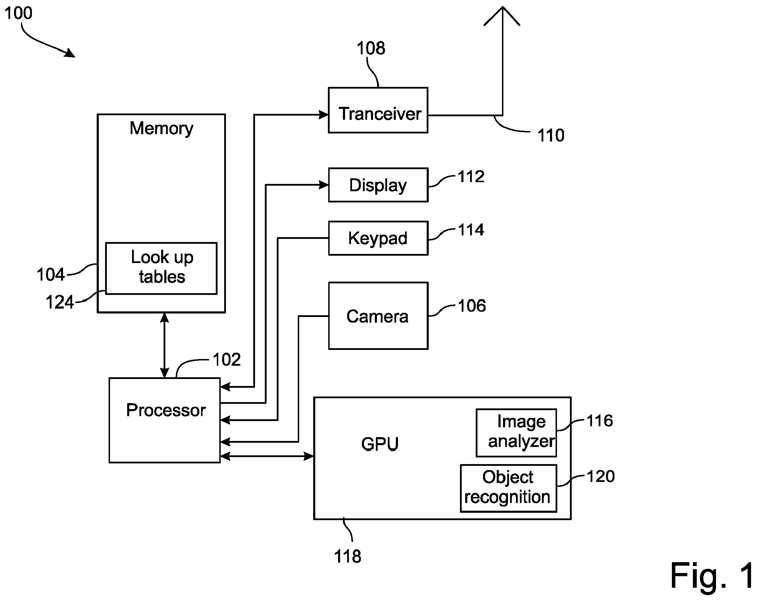

Fig. 1 illustrates an apparatus 100 in accordance with an embodiment. The apparatus can be, for example, a camera, a mobile phone, a driving controller of an autonomously movable vehicle, a minivan, a motorbike, a car, a lorry, a robot, etc. The apparatus 100 comprises a controller 102 or processor for controlling the operations of the apparatus 100. The controller 102 may be connected to a memory 104 which may store both data and/or may also store instructions for implementation on the controller 104. The controller 104 may further be connected to other circuitry such as an image capturing device 106 suitable for capturing images on surroundings of the apparatus 100. The apparatus 100 may also comprise radio interface circuitry 108 (also can be called as radio frequency module) connected to the controller (or the processor) and suitable for generating wireless communication signals for example for communication with a cellular communications network, a wireless communications system or a wireless local area network. The radio interface circuitry 108 includes one or more transmitters and one or more receivers. The transmitter and the receiver can be configured to one entity such as a radio transceiver. The apparatus 100 may further comprise a plurality of antennas 110 connected to the radio interface circuitry 108 for transmitting radio frequency signals generated at the radio interface circuitry 108 to other apparatus(es) and for receiving radio frequency signals from other apparatus(es).

The apparatus 100 may further comprise a display 112 suitable to display an image or video. The apparatus 100 may further comprise a keypad 114 or other suitable data or user interface mechanism. For example, the user interface may be implemented as a virtual keyboard or data entry system as part of a touch-sensitive display.

The image capturing device 106 can be used to take images and/or videos of the surroundings of the apparatus 100. The captured images and/or video will also be called as captured visual information or, shortly, image information in this disclosure. The image information is stored to the memory 104 for successive analyses, as will be described below.

The apparatus further comprises an image analyzer 116 for analyzing captured images e.g. to find objects in the images. It should be noted that the image analyzer 116 need not be a separate circuitry but may be implemented as a software stored to the memory 104 to be executed by the processor or as a combination of hardware and software.

In accordance with an embodiment, the apparatus 100 comprises a graphics processing unit (GPU) 118 in which at least part of the image analyzes operations can be performed.

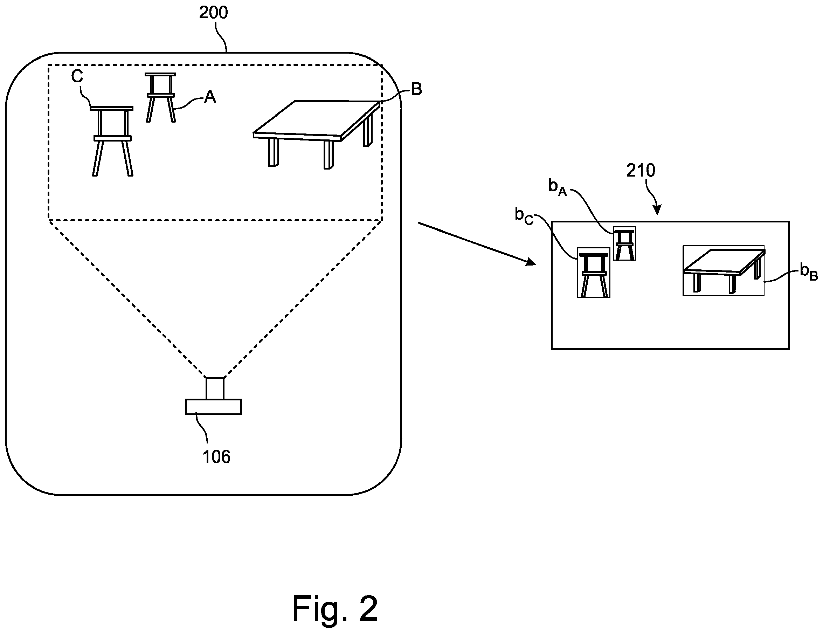

The image capturing device 106 has a certain resolution of pixels and may be different in different apparatuses 100. When an image is captured, objects in the captured images is represented as certain pixels within the whole image area. The farther an object is from the image capturing device 106 the smaller is the area of pixels in which the object is represented in the captured image. This is illustrated in Fig. 2 in which the image capturing device 106 has captured two objects A, C of the same size in the scene 200 at different distances, and one, different object B. The captured image 210 is illustrated on the right-hand side of Fig. 2.

However, by changing optical properties of the imaging device 106, for example by a zooming optics, the area of the image may be enlarged or reduced. In the following, however, it is assumed that the optical properties remain the same wherein the size of the object in the image is indicative of a distance of the object from the imaging device 106.

In accordance with an embodiment, precise localization utilizes a scan of a space, along with information about landmarks (e.g. objects) in known positions in the space and study of the parameters of the imaging device 106. More specifically, at a calibration phase real dimensions of the objects within the space are measured, if not known otherwise, and a look up table 124 is built. It is assumed that $O_w$ is the width of the object and $O_h$ is the height of the object e.g. in meters. Then, after taking (capturing) a picture, the pixels of the object in the picture taken by the capturing device 106 are measured. It is further assumed that $O_{w,p}$ is the width of the object in the image in pixels and $O_{h,p}$ is the height of the object in the image in pixels. Details of the objects are stored in the look up table including measures (physical dimensions) of the objects, for example. Next, camera calibration is performed with a number of pictures taken in the space and the intrinsic and extrinsic parameters of the camera are computed. The real distance of the image capturing device 106 from objects can be computed by the following equation (1) after the distance from the image capturing device 106 and a specific object have been measured once. That distance can be expressed with D. The following equation gives the coefficient which can be used to find analogies between objects in physical dimensions and pixels:

$$F_{coef} = \frac{O_{w,p} \times D}{O_w} \tag{1}$$

which matches with the camera calibration output. Once that coefficient has been obtained, the distance $D_i$ from the image capturing device 106 to any other object i can be found by using the following equation:

$$D_i = \frac{F_{coef} \times O_{wi}}{O_{wi,p}} \tag{2}$$

where $O_{wi}$ is the width of the object *i* and $O_{wi,p}$ is the width of the object *i* in the image in pixels.

The above-described calibration operation may be performed for each image capturing device 106 to be used in positioning to obtain intrinsic and extrinsic parameters of each image capturing device 106.

This procedure may be repeated for the same scene so that objects in the scene become captured from multiple different directions i.e. the angle of the image capturing device 106 changes between different image capturing moments. This may help recognize the same object from different locations in the scene during positioning and/or collision avoidance etc.

When a plurality of images have been captured from a scene and objects from different directions, it may be possible to define an optical path of an object from one captured direction (angle) to another captured direction (angle), wherein during the positioning procedure of the apparatus it may be possible to examine a captured image of an object and based on the optical path determine the actual angle of the object with respect to the location of the apparatus at different moments of the movements of the apparatus. The determined angle may then be used to improve the accuracy of the positioning.

Table 1 below shows a part of the look up table 124, in accordance with an embodiment. The look up table 124 may comprise, for example, an index, a class of a recognized object, dimensions of the object in pixels, and physical dimensions of the object.

Table 1

| Index | Class | Pixel dimensions | Physical dimensions |
|---|---|---|---|
| 1 | Chair | 25, 40 | 40, 64 |
| 2 | Table | 45, 30 | 100, 67 |
| 3 | Chair | 24, 37 | 35, 54 |
| ... | ... | ... | ... |
| N | | | |

The size of the object is not necessarily directly known by the apparatus. Therefore, some kind of image analyses may be performed based on the captured image to find object(s) and to determine what kind of object(s) they are. For that purpose, an object recognition algorithm may be employed by the apparatus 100. An example of such algorithm is the so-called YOLO algorithm (You Only Look Once), but also other neural network-based algorithm(s) may be used. These algorithms may also be called as machine learning (ML) algorithms. Such network-based algorithms are usually trained beforehand with some known data so that they learn (become aware of) properties of certain known objects. For example, data used in the learning phase may include images of different kinds of object like vehicles from different manufacturers and different models, furniture, human beings, animals, tools, etc. Hence, those objects can be classified accordingly, and some characteristics and attributes of the objects have also been trained to the object recognition algorithm. An example of the characteristics is a size of an object (in 2-dimensional, 2D, or three-dimensional, 3D). In other words, the learning process may input the image data of the objects and dimensions so that the learning algorithm becomes aware of the objects' outlook (e.g. texture and shape) and dimensions.

It should be noted that in some locations it is possible to restrict the classification of objects so that only certain kinds of objects are expected to exist and/or certain kinds of objects are not expected to exist in that space. As an example, in some outer spaces one don't expect to see certain kind of objects but only a specific set of classes of objects (e.g. 20 classes).

An object recognition algorithm 120, which may be software code to be executed by the processor 102, examines pixels of a captured image and searches possible objects within the image. The object recognition algorithm may divide the image into smaller grids (grid cells) and search objects which each grid cell. If the object recognition algorithm determines a potential object, it may form a bounding box around the object. Such bounding box may be a rectangle having width w and height h. The width w and height h may correspond the (broadest) width and (highest) height of the object if the bounding box is constructed accurately around the object but that is not always the case. The size of the bounding box may vary due to changes in position of the object and/or the image capturing device 106, noise, etc. Fig. 2 illustrates bounding boxes $b_A$, $b_B$ and be which have been formed to surround the objects A, B and C, respectively, in the captured image 210.

Types of the objects within the bounding boxes may be examined and classified accordingly, based on the learning data.

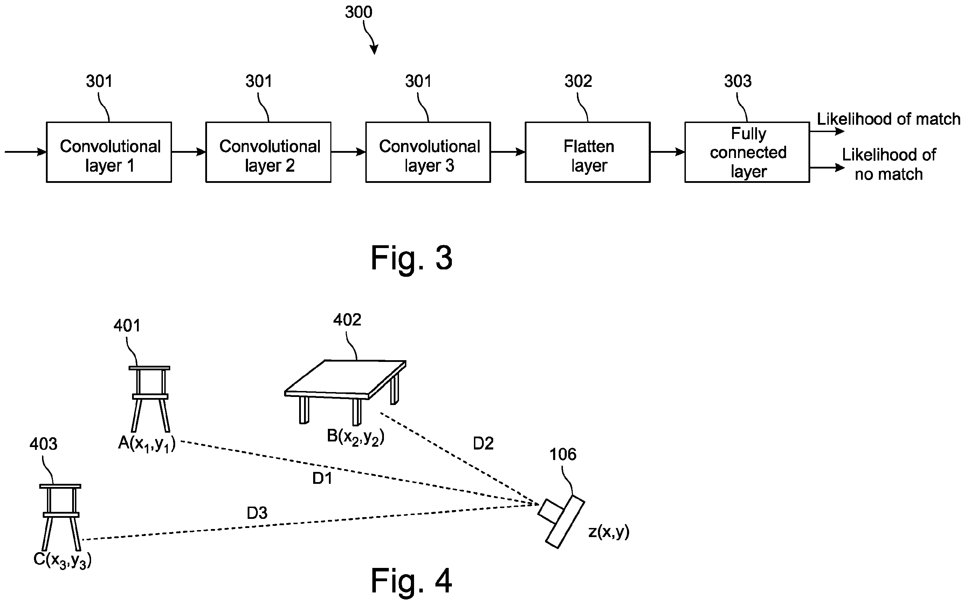

Fig. 3 illustrates in a simplified way a structure of a convolutional neural network 300, in accordance with an approach. It has several convolution layers 301, a flatten layer 302 and a fully connected layer 303. The first convolution layer receives the data and the fully connected layer 303 outputs a likelihood of a match i.e. the object has been recognized, and a likelihood of not a match i.e. that the object has not been recognized. The neural network 300 may compare the input with a plurality of learned images and select that one which produced the highest likelihood of match or which produced a likelihood of match greater than a threshold. That image is then used to find corresponding data in the look up table.

It should be noted that also other possible neural networks may be utilized in the object recognition phase.

By employing the object recognition algorithm, objects can be identified and then the look up table can be checked to see physical dimensions of the recognized objects. The obtained physical dimensions are mapped with the dimensions of the objects in pixels based on the bounding boxes which have been formed around the image information of the objects. Then, by applying the equation (2) the distance of the image capturing device 106 from any object in the space can be determined. The actual position of the objects/landmarks are saved in the look up table and finding the actual position of the user who holds the image capturing device 106 is a trigonometric problem. To explain this, it is assumed that an object 401 and another object 402 are located in position A and B respectively (see Fig. 4). Let D1 and D2 be the distance from object 401 and object 402, respectively, from the unknown location z = (x, y) where the user is positioned. Then the following equations are solved to find the location z of the user:

$$D_1 = \| \mathbf{A} - \mathbf{z} \| = \sqrt{(A_x - x)^2 - \left(A_y - y\right)^2} \tag{3}$$

$$D_2 = \| \mathbf{B} - \mathbf{z} \| = \sqrt{(B_x - x)^2 - \left(B_y - y\right)^2} \tag{4}$$

where A = $(A_x, A_y)$ and B = $(B_x, B_y)$ are the location coordinates of objects 401 and 402. If a third dimension is added to the localisation z = (x, y, h), namely the height, a third object 403 at a third location C will be needed, wherein the equations will become as follows:

$$D_1 = \| \mathbf{A} - \mathbf{z} \| = \sqrt{(A_x - x)^2 - \left(A_y - y\right)^2 - (A_h - h)^2} \tag{5}$$

$$D_2 = \| \mathbf{B} - \mathbf{z} \| = \sqrt{(B_x - x)^2 - \left(B_y - y\right)^2 - (B_h - h)^2} \tag{6}$$

$$D_3 = \| \mathbf{C} - \mathbf{z} \| = \sqrt{(C_x - x)^2 - \left(C_y - y\right)^2 - (C_h - h)^2} \tag{7}$$

While this is one example method to perform relatively precise localization via images, the estimate of the bounding box generated by machine learning algorithms is subject to statistic variations which will highly alternate the quality of the localisation prediction. Nevertheless, if the statistics follows some nice Gaussian properties it can be used in order to still get a relatively precise estimate which can be fruitful in the context of the different bounding boxes sizes.

In the following, the positioning method via the identification of objects is studied in real time video with noise. Assuming that the capturing device 106 is in an indoor environment and that there are three identifiable objects in the room, an object 1 (e.g. a chair), an object 2 (e.g. a table), an object 3 (e.g. a bed). In an ideal world, from the apparent size of the objects one could derive the position of the capturing device 106 since the apparent sizes give the distance of the objects to the capturing device 106. In fact the objects will be identified via bounding boxes subject to random size variations. For the same position of the capturing device 106 the objects may be identified with many different bounding box sizes due to, for example, noise, and possibly slight variations of locations of the objects and/or the capturing device 106.

To eliminate or at least reduce the effect of the size-varying bounding boxes, the following directions can be taken into account. Let z be a point in the room space and let b(z) = $(b_A(z), b_B(z), b_C(z))$, where $b_i(z) = \left( O_w^i, O_h^i \right)$, denote the bounding box of object i (=A, B or C in this example) detected from a view from the capturing device 106 placed on the point z. It is also assumed that b(z) for z fixed is a random variable with mean M(z) and covariance matrix $Q^{-1}(z)$. Also the assumption that the b(z) actually follows a Gaussian distribution is made:

$$P(\mathbf{v}|\mathbf{z}) = \sqrt{\frac{\det(\mathbf{Q(z)})}{\pi^D}} \exp \left( -\frac{1}{2} \langle \left( \mathbf{v} - \mathbf{M}(z)\mathbf{Q}(z)\left(\mathbf{v} - \mathbf{M}(z)\right) \right) \rangle \right) \tag{8}$$

where P($\mathbf{v}|\mathbf{z}$) is the probability density of the random variable b(z) and $\mathbf{v}$ is a bounding box vector.

Let R(z) denote the matrix defined by

$$\mathbf{R}(z) = -\frac{1}{2}\mathrm{tr}\left( \left( (\nabla\mathbf{Q})\mathbf{Q^{-1}} \right)^2 \right) + \mathrm{tr}(\mathbf{Q}\nabla\mathbf{M}\otimes\nabla\mathbf{M}) \tag{9}$$

where V is the gradient operator with respect to the position z. It is assumed that the function M(z) and Q(z) and their gradient have been sampled on a 3D lattice in the room via multiple shots so that mean and variance can be extracted. The 3D lattice is a kind of 3D representation of the object taken from 2D views as multiple images of the object have been captured. In accordance with an approach, a 3D lattice may be constructed from a set of 2D images obtained by translation and rotation of captured 2D images, which are mapped to their corresponding locations in space, whereupon the volume data is reconstructed by interpolation, and sampled on a 3D lattice. The 3D lattice basically forms a 3D structure based on the repeated patterns in the series of images.

Let z(t) be a trajectory of the capturing device 106 in the room space starting at time t. It is assumed that a picture (an image) is taken every $\delta T$ and the trajectory z(t) for t integer multiple of $\delta T$ by a prediction z(t) should be estimated. It is also assumed that at each t multiple of $\delta T$ there is a measure of the bounding box vector $\mathbf{v}$(t).

Based on the previous equations

$$\overline{\mathbf{z}}(t + \delta T) = \overline{\mathbf{z}}(t) + \mathbf{R}^{-1}\big(\overline{\mathbf{z}}(t)\big)\nabla L\big(\overline{\mathbf{z}}(t), \mathbf{v}(t + \delta T)\big) \qquad (10)$$

where L($\mathbf{z}$, $\mathbf{v}$) = log P ($\mathbf{v}|\mathbf{z}$). Then, the following result can be shown: if $\overline{z}(t)$ = z(t) and that $\overline{z}(t + \delta T)$ = z(t) then the expected value of $\overline{z}(t + \delta T)$ is E[$\overline{z}(t + \delta T)$] = z(t).

A drift error may also affect the determination of locations of objects: if z(t + $\delta_T$) = z(t) + $\delta z$ then E[$\overline{z}(t + \delta_T)$] = z(t + $\delta_T$) + O($\|\delta z\|^2$). If the predictions are smoothed appropriately, for example by taking an average of several measurements, the method is able to detect a movement well below the lattice granularity. Also if $\forall t > 0$: z(t) = z(0) then

$$\lim_{t} E[\overline{z}(t)] = z(0).$$

In the following, the process of finding a location based on captured images and utilizing the above presented principles will be described in accordance with an embodiment.

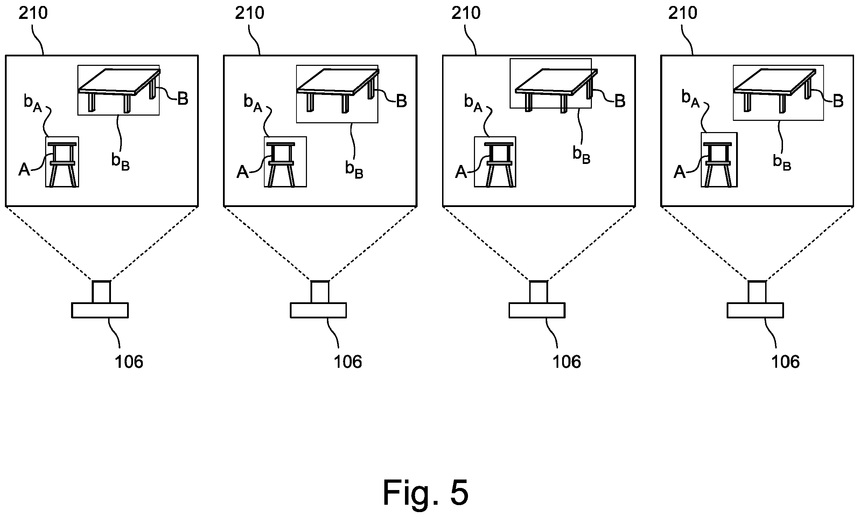

The apparatus 100 is located in a pre-examined location such as a warehouse, a parking plot, a factory, etc. The apparatus 100 is, for example, installed in an autonomously moving vehicle, a robot, a truck or some other kind of moving object. The apparatus 100 is used to determine the location of the moving object within the scene. The image capturing device 106 takes (captures) images at intervals and provides the captured images to the image analyzer 116. For each captured image the image analyzer 116 performs object recognition and forms a bounding box for each found object. The sizes of the bounding boxes (in pixels) are also stored to the memory 104. A set of the captured images are used by the image analyzer 116 to compute the mean and covariance for each bounding box of the same object. In other words, the image analyzer 116 examines for each image of the set which bounding boxes in successive images belong to the same object. This examination may be performed for each bounding box in an image. Hence, the image analyzer 116 can calculate the mean and covariance matrix of bounding boxes belonging to the same object. This is illustrated in Fig. 5 in which the same two objects A, B are present in each image of the set of images and corresponding bounding boxes $b_A$, $b_B$ of the two objects A, B are also illustrated in Fig. 5. The image analyzer 116 uses the bounding boxes $b_A$ in the images to calculate the mean and covariance matrix for the bounding box vectors related to the object A and, respectively, uses the bounding boxes $b_B$ in the images to calculate the mean and covariance matrix for the bounding box vectors related to the object B. Results of these calculations may be provided by the image analyzer 116 to the location calculating block 118, which uses this information to estimate the distance from the apparatus to the objects A and B. In other words, the size of the estimated bounding box is used to determine the distance from the apparatus 100 to the corresponding object A, B. It is assumed that the location of the objects A, B is known, wherein equations (3) and (4) can be used to determine the current location z of the apparatus 100. If there are more than two objects in the images then equations (5), (6) and (7) may be used instead wherein the current height of the apparatus 100 may also be determined.

The above-described operations may be repeated to continuously recover the location of the apparatus 100, i.e. a track the apparatus travels.

It was assumed above that the locations of the detected objects are known.

In accordance with an embodiment, the apparatus 100 may have visual information of different spaces so that based on captured images the apparatus 100 may be able to identify the space the apparatus 100 is currently located and retrieve e.g. from the memory 104 information of objects at known positions in the space (landmarks). There may also be a separate look up table for each such space, wherein after the identification of the space the apparatus 100 also retrieves the corresponding look up table.

It should be noted that retrieving from the memory does not necessarily mean that the stored information is actually moved or copied from the memory to another location but the information is made available to the operational entities of the apparatus 100, e.g. to the image analyzer 116. In other words, the image analyzer 116 is made aware of the location in the memory 104 where the correct look up table is located, wherein the image analyzer 116 can use data of that look up table in the analyzes operations.

The location of the objects may also be used, not only for positioning purposes, but additionally or instead avoiding collisions to the objects, guide a vehicle to a destination e.g. in a cargo terminal (last mile guidance) or a robot in a warehouse etc.

The application of the described methodology may produce fine granularity regarding the variation on bounding boxes given by machine learning algorithms, e.g. Yolo, and solves the problem of photos or videos taken from various equipment (smartphone cameras, other cameras) in various conditions (physical lighting, darkness, etc.).

The neural network used in the above embodiments may be a deep neural network, a binary neural network or another kind of neural network.

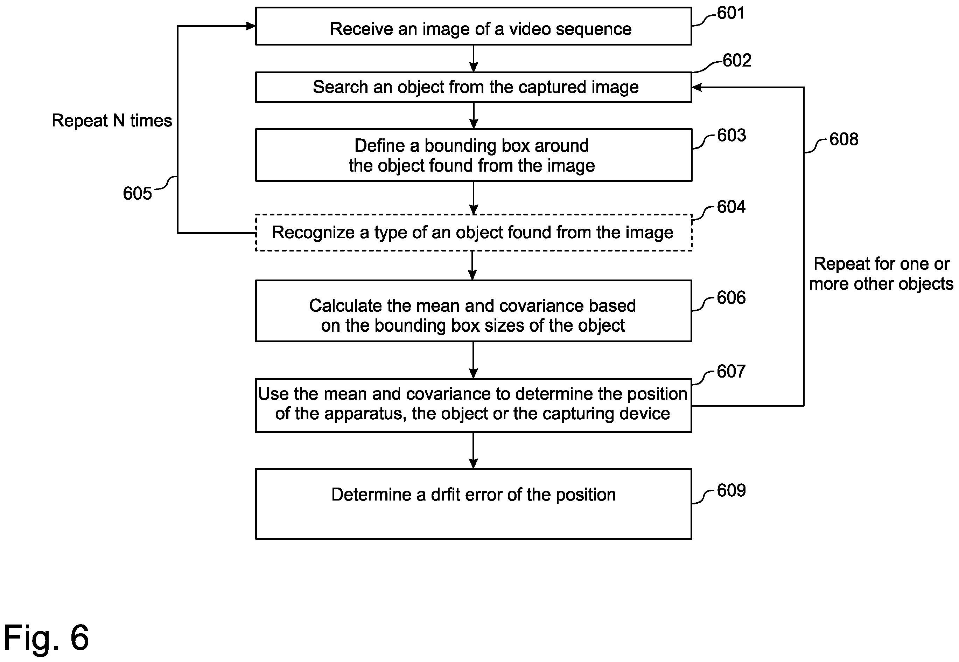

Fig. 6 is a flow diagram of a positioning method, in accordance with an embodiment. The apparatus 100 captures 601 an image and objects are searched 602 from the captured image. A bounding box is defined 603 around the objects the object recognition procedure has detected. For each detected object an object recognition 604 to determine which kind of object it is may be performed at this stage or at a later stage. This procedure may be repeated 605 a number N of times so that a mean and covariance can be calculated 606. The mean and covariance can be used 607 to determine the position of the apparatus 100, the object or the capturing device 106. The apparatus 100 may also determine 609 a drift error of the position.

In accordance with an embodiment, the mean and covariance can first be used to determine a distance from the apparatus 100 to each of the detected and recognized objects. Based on the assumption that the actual position of at least some of the objects in the scene is known, the determined distances can be used to calculate the position of the apparatus 100, the object or the capturing device 106.

The apparatus 100 may communicate with a communication network, for example. The apparatus 100 may send position information to other entities via the communication network and receive information from other entities via the communication network. For example, part of the calibration and/or positioning operations described above may be implemented in the communication network e.g. as a cloud service. It may also be possible that information related to the look up tables and/or learning material for the neural network may be retrievable from the communication network.

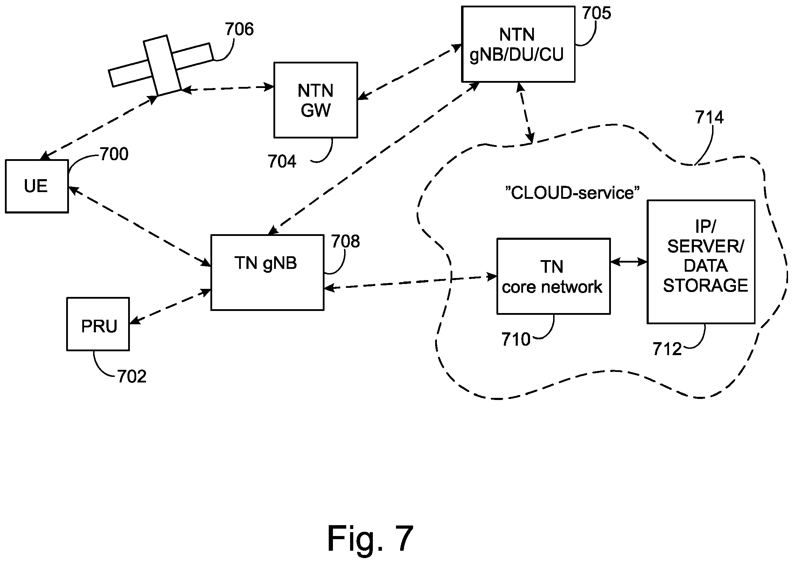

Fig. 7 shows a part of an exemplifying radio access network, only showing some elements and functional entities, all being logical units, whose implementation may differ from what is shown. The connections shown in Fig. 7 are logical connections; the actual physical connections may be different. It is apparent to a person skilled in the art that the system typically comprises also other functions and structures than those shown in Fig. 7.

Fig. 7 shows a user device (UE) 700 and a positioning reference unit (PRU) 702 configured to be in a wireless connection on one or more communication channels in a cell with an access node (such as (e/g)NodeB, TN gNB) 708 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The (e/g)NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to a core network 710 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access Management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

The communication system is also able to communicate with other networks, such as a non-terrestrial network, a public switched telephone network or the Internet 712, or utilize services provided by them. The communication network may also be able to support the usage of cloud services, for example at least part of core network operations may be carried out as a cloud service (this is depicted in Fig. 7 by "cloud" 714). The communication system may also comprise a central control entity, or a like, providing facilities for networks of different operators to cooperate for example in spectrum sharing.

The non-terrestrial network may comprise NTN gateways 704, NTN gNBs 705 and NTN satellites 706, for example.

5G may also utilize satellite communication to enhance or complement the coverage of 5G service, for example by providing backhauling, wireless access to wireless devices, service continuity for machine-to-machine (M2M) or Internet of Things (IoT) devices or for passengers on board of vehicles, or ensuring service availability for critical communications, and future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs (High Altitude Platform Stations). Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground (e.g. the core network 710 in Fig. 7) or in a satellite.

A memory may be a computer readable medium that may be non-transitory. The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs) and processors based on multi-core processor architecture, as non-limiting examples.

Embodiments may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialized circuits such as field programmable gate arrays FPGA, application specify circuits ASIC, signal processing devices and other devices. References to computer readable program code means, computer program, computer instructions, computer code etc. should be understood to express software for a programmable processor firmware such as the programmable content of a hardware device as instructions for a processor or configured or configuration settings for a fixed function device, gate array, programmable logic device, etc.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules, field-programmable gate arrays (FPGA), application specific integrated circuits (ASIC), microcontrollers, microprocessors, a combination of such modules. The design of integrated circuits is by and large a highly automated process.

Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term "circuitry" may refer to one or more or all of the following:

(a) hardware-only circuit implementations (such as implementations in only analogue and/or digital circuitry) and
(b) combinations of hardware circuits and software, such as (as applicable):

(i) a combination of analogue and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

## Claims

1. An apparatus comprising at least one processor; and at least one memory storing instructions that, when executed by the at least one processor, cause the apparatus at least to:

receive images of a video sequence for object detection;
search an object from the received images;
define a bounding box around a detected object in the received images;
calculate mean and covariance to the detected object;
determine, based on the mean and covariance, a position of at least one of the following: the apparatus, the detected object, or an image capturing device; and
determine a drift error of the determined position.

2. The apparatus according to claim 1, said at least one memory storing instructions that, when executed by the at least one processor, cause the apparatus to:
recognize the object in the bounding boxes.

3. The apparatus according to claim 2, said at least one memory storing instructions that, when executed by the at least one processor, cause the apparatus to determine the position of the apparatus by:
determining distances from the apparatus or the image capturing device to the detected object.

4. The apparatus according to claim 3, said at least one memory storing instructions that, when executed by the at least one processor, cause the apparatus at least to:

maintain a look up table of classes of objects; and
enter in the look up table an actual position of the detected object in a scene where the image representing the object has been captured.

5. The apparatus according to claim 4, said at least one memory storing instructions that, when executed by the at least one processor, cause the apparatus at least to:

compare the image of the object with image information in the look up table comprising classification information of objects and dimensions of objects;
use the dimensions and the actual position of the object to determine a distance to the object from a location the image have been captured.

6. The apparatus according to claim 4 or 5, said at least one memory storing instructions that, when executed by the at least one processor, cause the apparatus at least to:

identify the object based on the look up table to find out physical dimensions of the recognized object;
map the obtained physical dimensions with the dimensions of the objects in pixels based on the bounding box which have been formed around the image information of the object.

7. The apparatus according to any of the claims 1 to 6, said at least one memory storing instructions that, when executed by the at least one processor, cause the apparatus at least to:

search a plurality of objects; and
define bounding boxes around all detected objects.

8. The apparatus according to claim 7, said at least one memory storing instructions that, when executed by the at least one processor, cause the apparatus at least to:

examine from the plurality of images which bounding boxes represent a same object; and
use those bounding boxes representing the same object to calculate the mean and covariance for that object.

9. The apparatus according to any of the claims 1 to 8, said at least one memory storing instructions that, when executed by the at least one processor, cause the apparatus at least to:

compare the area within the bounding box of the object with a plurality of image information obtained by an image learning process of a neural network; and
select a class for the object based on the image information which produced highest likelihood of match or which produced a likelihood of match greater than a threshold.

10. The apparatus according to any of the claims 1 to 9, said at least one memory storing instructions that, when executed by the at least one processor, cause the apparatus at least to:

enter the received images to a neural network;
execute the neural network to recognize the object;
output from the neural network at least one of a likelihood of a match or a likelihood of not a match regarding the object.

11. The apparatus according to any of the claims 1 to 10, said at least one memory storing instructions that, when executed by the at least one processor, cause the apparatus at least to:
use dimensions of the bounding box and dimensions of the object to determine a current location of an object of interest.

12. The apparatus according to claim 11, said at least one memory storing instructions that, when executed by the at least one processor, cause the apparatus at least to:

determine the location at intervals based on a plurality of images of the video sequence;and
use the locations determined at intervals to find out a travelling route of the object of interest.

**13.** A method performed by an apparatus, comprising:

  receiving images of a video sequence for object detection;
  searching an object from the received images;
  defining a bounding box around a detected object in the received images;
  calculating mean and covariance to the detected object;
  determining, based on the mean and covariance, a position of at least one of the following: the apparatus, the detected object, or an image capturing device; and
  determining a drift error of the determined position.

**14.** The method according to claim 13 comprising:
  recognizing the object in the bounding boxes.

**15.** The method according to claim 13 or 14 comprising:
  determining distances from the apparatus or the image capturing device to the detected object.

Fig. 1

Fig. 2

**Fig. 3**

**Fig. 4**

EP 4 365 854 A1

Fig. 5

EP 4 365 854 A1

Fig. 6

Fig. 7

Europäisches
Patentamt

European
Patent Office

Office européen
des brevets

## EUROPEAN SEARCH REPORT

Application Number

EP 23 20 5589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 637 320 B1 (FUJITSU LTD [JP]) 20 October 2021 (2021-10-20) * paragraph [0016] – paragraph [0188]; figures 1-19 * | 1-15 | INV. G06V10/25 G06V10/75 G06V20/58 |

TECHNICAL FIELDS
SEARCHED        (IPC)

G06V

The present search report has been drawn up for all claims

| Place of search | Date of completion of the search | Examiner |
|---|---|---|
| The Hague | 5 February 2024 | Thibault, Guillaume |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 5589

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2024

| Patent document cited in search report | | Publication date | Patent family member(s) | | Publication date |
|---|---|---|---|---|---|
| EP 3637320 | B1 | 20-10-2021 | EP | 3637320 A1 | 15-04-2020 |
| | | | JP | 7208480 B2 | 19-01-2023 |
| | | | JP | 2020061066 A | 16-04-2020 |
| | | | US | 2020117991 A1 | 16-04-2020 |

EPO FORM P0459

For more details about this annex : see Official Journal of the European Patent Office, No. 12/82